(19) Europäisches Patentamt
European Patent Office
Office européen des brevets

(11) EP 3 018 647 B1

(12) **EUROPEAN PATENT SPECIFICATION**

(45) Date of publication and mention
of the grant of the patent:
**03.01.2018 Bulletin 2018/01**

(51) Int Cl.:
***G09C 5/00*** (2006.01)

(21) Application number: **14306779.1**

(22) Date of filing: **06.11.2014**

(54) **Fake information based on n-gram randomizations**

Falsche Informationen auf Basis von N-Gramm-Randomisierungen

Calculs aléatoires N-gram sur la base d'informations factices

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.05.2016 Bulletin 2016/19**

(73) Proprietor: **ALCATEL LUCENT
92100 Boulogne-Billancourt (FR)**

(72) Inventors:
• **Jacquet, Philippe
91620 Nozay (FR)**
• **Milioris, Dimitrios
91620 Nozay (FR)**

(74) Representative: **Berthier, Karine et al
Alcatel-Lucent International
Patent Business
Site Nokia Paris Saclay
Route de Villejust
91620 Nozay (FR)**

(56) References cited:
**US-B1- 6 823 068**

• **Mehrez Boulares, Mohamed Jemni: "Combined Methodology Based on Kernel Regression and Kernel Density Estimation for Sign Language Machine Translation" In: "ADVANCES IN COMMUNICATION NETWORKING: 20TH EUNICE/IFIP EG 6.2, 6.6 INTERNATIONAL WORKSHOP, REVISED SELECTED PAPERS", 1 September 2014 (2014-09-01), SPRINGER VERLAG, DE (LECTURE NOTES IN COMPUTER SCIENCE, ISSN 1611-3349), Rennes, France, XP047296665, ISSN: 0302-9743 pages 374-384, DOI: 10.2007/978-3-319-12436-0_42, * Sections 3.6 and 3.7 ***
• **NICOLÁS SERRANO ET AL: "On a Kernel Regression Approach to Machine Translation", 10 June 2009 (2009-06-10), PATTERN RECOGNITION AND IMAGE ANALYSIS, SPRINGER BERLIN HEIDELBERG, BERLIN, HEIDELBERG, XP019119095, ISBN: 978-3-642-02171-8 pages 394-401, * Sections 3 and 4 ***

## Description

FIELD OF THE INVENTION

The invention relates to the technical domain of data security, particularly data held in computer files, in secure databases or data which is subject to be transmitted over a communication channel. More particularly, it relates to the technical domain of the creation of fake documents, called honeypots, which are used to track and trap security leaks in an information storage system. It may also apply to the field of the transmission of sensitive data over data communication networks like the Internet. In particular, it may apply to confidential documents that are replaced by fake documents that do not contain pertinent information.

BACKGROUND OF THE INVENTION

The following terms are used early on in this specification, and will be defined here for convenience.
An n-gram is a series of n consecutive symbols extracted from a given text. The symbols making up an n-gram may, among other things, be words or letters. N-grams have an order which, if we are dealing with words, then it is the number of words in the N-gram. For example in the item of text "to be or not", if n (the order) equals 1, dividing this text into a set of n-grams will yield the sequence "to, be, or, not". If we divide this short text into 2-grams, this will yield a sequence consisting of "to be, be or, or not". If the text is divided into 3-grams, this will yield the sequences "to be or, be or not". If the n-grams consist of series of n consecutive letters, then an 1-gram sequence would read t, o, _, b, e, _, o, r, _, n, o, t, _, t, o, _, b, e, and a 2-gram sequence would read to, o_, _b, be, e_, _o, or, r_, _n, no, ot, t_, _t, to, o_, _b, be, where "_" is the space character. In this specification, we shall consider the natural-language support text we use as a support for the encrypted message as being split up into n-grams consisting of a series of n consecutive letters. Typically, n may be 3.
A multi-graph is a graph comprising a number of nodes or vertices joined by arcs or edges in which there may be multiple edges between different nodes or vertices.
A syntax graph is a multi-graph the set of vertices of which contains all the n-grams of a given size of a given text.
A Eulerian path (or trail) is a path within a graph which visits every edge exactly once.
A Eulerian circuit is a Eulerian path which starts and ends on the same vertex.
A sub-Eulerian path is a trail in a graph which visits every edge at the most once.
A sub-Eulerian circuit is a sub-Eulerian path which starts and ends on the same vertex.
A honeypot is a fake document which is designed to attract the attention of hackers , and is used to track and trap security leaks such as in document storage system.
The use of syntax graph is known for example from US 6 823 068, which describes a method for encrypting a plaintext message based on a symmetric cryptographic shared key which is a syntax graph.
Besides, it is known from Mehrez Boulares, Mohamed Jemn, "Combined Methodology Based on Kernel Regression and Kernel Density Estimation for Sign Language Machine Translation", in "ADVANCES IN COMMUNICATION NETWORKING: 20TH EUNICE/IFIP EG 6.2, 6.6 INTERNATIONAL WORKSHOP, REVISED SELECTED PAPERS", 1 September 2014, SPRINGER VERLAG (LECTURE NOTES IN COMPUTER SCIENCES, ISSN 1611-3349), and from Nicolas Serrano et al: "On a Kernel Regression Approach to Machine Translation", 10 June 2009, PATTERN RECOGNITION AND IMAGE ANALYSIS, ISBN 978-3-642-02171-8, the use of kernel regression techniques for machine translation, where Eularian paths in syntax graphs of n-grams are used to find a target translated string.
Research and development have been undertaken to improve the performances of data encryption and security mechanisms, so as to dramatically reduce the probability of encrypted data being hacked and finally decrypted by an ill-intentioned entity. Nevertheless, improvements in this direction usually get counter-balanced by progress in hacking technologies. In particular, the development of cloud-computing or other massively parallel computing arrangements make it possible to decipher even sophisticated encryption schemes.
Consequently, it is difficult today to ensure the invulnerability of any data security mechanism, and this situation can be a brake to further development of e-business applications and any applications implying transmission of sensitive data. The protection of confidential information has become a crucial aspect for high tech companies. Furthermore, there is a permanent and emergent need to improve security systems.
Because of the existence of external ill-intentioned users that want in particular to have access to secure databases, it is becoming of primordial importance to know how to design systems in order to protect confidential information. The best method for finding out who is attacking a system and how might be to allow the extraction of the information in order to make the tracking of the ill-intentioned user possible. Such a method has the major disadvantage of compromising confidential information.
One technique for finding out who is attacking a system and how consists in particular in challenging the ill-intentioned user to attack computer files, data storage systems or a related communication channel. To attract hackers and the like,
**[0017]** Various techniques have been proposed to produce fake documents that are credible as carrying confidential and critical information in order to attract and subsequently track and identify ill-intentioned users, but it requires a lot of effort and expertize to make such documents and typically puts a heavy demand on expert manpower and time, which could be really costly.

SUMMARY OF THE INVENTION

The aim of the present invention is to alleviate at least partly the above mentioned drawbacks and to make any further improvements..

One object of the present information consists in providing a method to produce fake information, such as a fake document, that is credible as regards it apparently being of a confidential and critical nature.

In particular, the present invention consists in creating honeypot document directly from an actual existing crucial document. A succession of steps allows elimination of most of the confidential and critical information contained in crucial documents, with the fake information really looking like the crucial documents. Only a human being can detect that the honeypot is inconsistent. This latter operation will however only be performed after a certain and significant time has passed, which in general is against the ill-intentioned user.

This aim is achieved with a method for producing fake information particularly in the form of documents from original text carrying sensitive data to attract the attention of, track and eventually trap ill-intentioned users comprising:

- providing an original text carrying sensitive data,
- creating a syntax graph for said original text, for a given n-gram size
- creating a random Eulerian path from said syntax graph of said original text in order to produce said fake information.

Prior to the step of creating the random Eulerian path, the method comprises:

- fixing the value r for n-grams, building texts of r consecutive symbols defining a n-gram and said original text comprising a plurality of n-gram which comprises an initial n-gram and a final n-gram,
- determining said syntax graph from all the n-grams of size r in the original text carrying sensitive data

The method according to the invention makes it possible to drastically reduce the effort involved in creating a fake document. Moreover, the creation of such a fake document can be automated.

Preferred embodiments comprise one or more of the following features, which can be taken separately or together, either in partial combination or in full combination.

According to an embodiment, said original text carrying sensitive data and said fake information are both a text written in a natural language.

According to another embodiment, the step of creating the random Eulerian path from said syntax graph of said original text carrying sensitive data in order to produce said fake information consists in:

- recovering the initial n-gram of said original text,
- choosing randomly an outgoing edge connecting said initial n-gram with a first n-gram, and recovering said first n-gram,
- choosing randomly an outgoing edge connecting the n-gram that has been already recovered with another n-gram to be recovered, and recovering said n-gram to be recovered,
- repeating the previous step on the remaining n-grams to be recovered,
- stopping the previous step when there is no n-gram to be recovered having previously used all the outgoing edges of the current n-gram,
- sequentially collecting each of the n-grams recovered and building a first intermediary fake document or said fake information.

According to another embodiment, the method comprises the following steps :

- scanning said first intermediary fake document from the initial n-gram and detecting an intermediate n-gram which has not exhausted an outgoing edge,
- splitting said first intermediary fake document into a first part comprising the n-gram sequentially collected between the initial n-gram and said intermediate n-gram and a second part comprising the n-gram sequentially collected between said intermediate n-gram and the last n-gram collected,
- choosing randomly a remaining outgoing edge connecting said intermediate n-gram with a second n-gram, and recovering said second n-gram,
- choosing then randomly a remaining outgoing edge connecting the n-gram that has been already recovered with another n-gram to be recovered, and recovering said n-gram to be recovered,
- repeating the previous step on the remaining n-gram to be recovered, the remaining n-gram having at least one remaining outgoing edge,
- stopping the previous step when there is no n-gram to be recovered having used all the outgoing edge of the current n-gram,
- sequentially collecting each of the n-grams recovered and complementing with them the first part of the intermediary fake document and concatenating to the second part of the intermediary fake document,
- repeating and stopping the previous steps until the exhaustion of the use of all the outgoing edges of each of the n-grams,

Another object of the invention concerns a transmitter for transmitting a fake document to a receiver over a communication channel, said transmitter being adapted for :

- determining a syntax graph of size r from an original text carrying sensitive data,
- creating a random Eulerian path from said syntax graph of said original text carrying sensitive data in order to produce said fake document,
- transmitting said fake document to a receiver.

For determining a syntax graph, the transmitter is further adapted for:

- fixing the value r for n-grams, building texts of r consecutive symbols defining a n-gram and said original text comprising a plurality of n-gram which comprises an initial n-gram and a final n-gram,
- determining said syntax graph from all the n-grams of size r in the original text carrying sensitive data.

According to an embodiment, said original text carrying sensitive data and said fake information are both a text written in a natural language.

According to another embodiment, the transmitter is adapted for:

- recovering the initial n-gram of original text carrying sensitive data,
- choosing then randomly an outgoing edge connecting said initial n-gram with a first n-gram, and recovering said first n-gram,
- choosing then randomly an outgoing edge connecting the n-gram that has been already recovered with another n-gram to be recovered, and recovering said n-gram to be recovered,
- repeating the previous step on the remaining n-gram to be recovered,
- stopping the previous step when there is no n-gram to be recovered having previously used all the outgoing edges of the current n-gram,
- sequentially collecting each of the n-grams recovered and build a first intermediary fake information or said fake information.

According to another embodiment, the transmitter is adapted for:

- scanning said first intermediary fake information from the initial n-gram and detecting an intermediate n-gram which has not exhausted its outgoing edge,
- splitting said first intermediary fake information into a first part comprising the n-gram sequentially collected between the initial n-gram and said intermediate n-gram and a second part comprising the n-gram sequentially collected between said intermediate n-gram and the last n-gram collected,
- choosing randomly a remaining outgoing edge connecting said intermediate n-gram with a second n-gram, and recovering said second N-gram,

- choosing then randomly a remaining outgoing edge connecting the n-gram that has been already recovered with another n-gram to be recovered, and recovering said n-gram to be recovered,
- repeating the previous step on the remaining n-gram to be recovered, the remaining n-gram having at least one remaining outgoing edge,
- stopping the previous step when there is no n-gram to be recovered having used all the outgoing edges of the current n-gram, sequentially collecting each of the n-grams recovered and complementing them the first part of the intermediary fake document and concatenating to the second part of the intermediary fake document,

repeating and stopping the previous steps until the exhaustion of the use of all the outgoing edges of each of the n-grams.

Another object of the invention concerns a communication network comprising at least a transmitter according to an embodiment herein disclosed and a receiver for receiving said fake information.

Another object of the invention concerns a computer program product comprising computer-executable instructions for performing a method according to an embodiment herein disclosed.

Another object of the invention concerns a digital storage medium encoding a machine-executable program of instructions to perform a method according to any of embodiments herein disclosed.

Further features and advantages of the invention will appear from the following description of embodiments of the invention, given as nonlimiting examples, with reference to the accompanying drawings listed hereunder.

BRIEF DESCRIPTION OF THE DRAWINGS

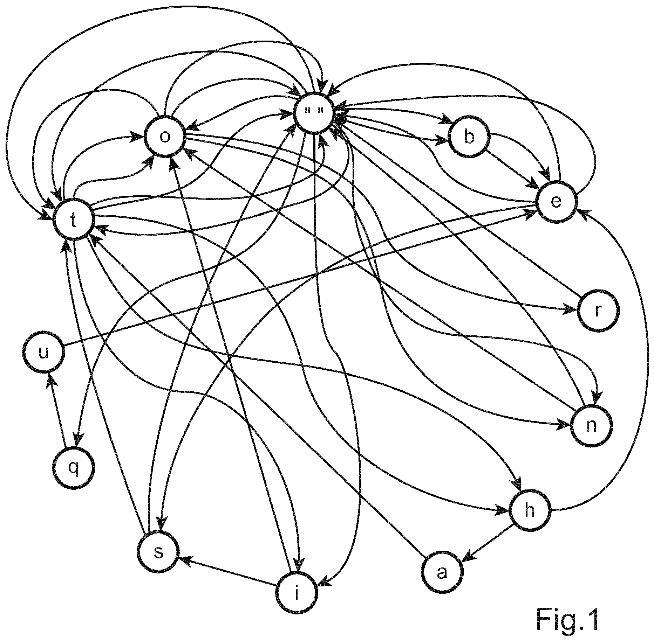

Fig. 1 shows an example for a syntax graph, corresponding to a 1-gram of a short text.

DETAILED DESCRIPTION OF THE INVENTION

The invention may comprise transmitting information between a transmitter and at least one receiver over an open communication channel. Such an open communication channel can for example be a data network like the Internet, wherein the information is transmitted from node to node and is prone to be intercepted by malicious applications during transmission.

Such a channel can be wireline or wireless and the invention is independent of the underlying infrastructure put in place to convey the invention.

The originality of the invention is that it allows fake documents that are credible as a source of confidential and critical information are produced, so that fake information is created directly from the actual existing crucial documents defined by original text carrying sensitive data, in order, among other things, to collect information to determine how external ill-intentioned users try to access secure databases. Such a method makes access to the fake document for ill-intentioned external users easier. Consequently, it is possible to analyze for instance a massive attack from an external ill-intentioned user and then to improve the design of a system by considering how and by whom the attack was made.

According to the invention, said original text carrying sensitive data T and said fake information T' are both a text written in natural language.

Natural language is language which is spoken by human beings, and, according to the present invention, is language which seems to be a language spoken by human beings. For example, the following sentences "to be or not to be that is the question" or "tor o bes the thatio que non be ist tot" could be considered as sentences from natural languages. On the contrary, the following symbols "AXB2TR" could not be considered as coming from a natural language.

This will be exemplified in the example below:

Let's take as an example the following text which we suppose includes some sensitive information:

"Up to now, the main methods used for text encryption are sophisticated algorithms that transform original data into an encrypted binary stream. The problem is that such streams are easily detectable under an automated massive attack, because they have a very different format and appearance to non-encrypted data, e.g. texts in natural language. This way any large scale data interception system would very easily detect encrypted texts. The result of this detection is twofold. First detected encrypted texts can be submitted to massive decryption processes on large computing resources, and finally be deciphered. Second, even when the texts would not eventually be deciphered, the source or the destination of the texts are at least identified as hiding their communications and therefore can be subject to other intrusive investigations. In other words encryption does not protect against a massive spying attack if encrypted texts are easily detectable. "

A possible honeypot or fake text, resulting from application of the mechanisms of the invention can be as follows:

"In In other words encryptions and finally be deciphered, therefore can be submitted binary stream. This way any large communication does not protectable under an automated massive investination is twofold. First detect the texts can be decrypted texts are in very easily detection of this detectable. Up to now, they are easily detected encryption processes on large scale data into encrypted to massive deciphered. Second, even when the main methods used form original data intrusive spying resources, and as hiding attack if encrypted data, e.g. text encrypted aspect of non encrypted texts are attack, because the source or texts would very different for the encryption are easily detect against a massive at least identified algorithms that transformat and their computing the texts in natural language. The problem is that such streams are sophisticated texts. The result of the destigation system would not eventually be subject to other interceptions. In »

In this example, it is clear that the fake information or text T' looks like an original text T in a natural language that seems to be an actual existing crucial document, and that it would require either manual intervention to determine that it is not a normal text, or a very complex automatic semantic analysis.

In addition, the fake information T' comprises only relatively few grammatical or lexicographic errors, so that any detecting mechanisms based on first level errors will not detect anything and will consider such an encrypted text as "badly written normal text".

Accordingly, the external ill-intentioned user does not realize that the access to the information T' (the fake document or honeypot) is being voluntarily allowed and is useful to the owner of a supposedly secure system, in order to track and trap security leaks in, for instance, a document storage system. It helps the owner of a supposedly secure system to determine attack strategies employed by external ill-intentioned users.

According to the invention, a syntax graph G is determined from an original text carrying sensitive data T to be transmitted.

A syntax graph is a multi-graph G, in which the nodes represent all the n-grams of a given size in a given text T. The edge set contains the possible edges that connect a first n-gram A with a second n-gram B, if and only if the n-gram B follows immediately the N-gram A in the text T. In other words, B is obtained after a translation by one symbol of A in the original text T.

An n-gram is made up of r consecutive symbols of the text T, including blanks, punctuation, etc. A size r is supposed to be fixed for the creation of the fake text T'.

For instance, assuming that r=3, if the text is "ABCD", the n-gram "BCD" follows immediately the n-gram "ABC", and the syntax graph contains the nodes "ABC" and "BCD".

This syntax graph and the way it is determined appears more clearly in the example depicted in FIG. 1. This example corresponds to a short text T as follows, and, for the simplicity of the explanation, r=1 is considered:

T= "to be or not to be that is the question"
A 1-gram corresponds to a letter-based approach.

In this case, each node or vertex corresponds to a letter present in the text T, and each arc corresponds to juxtaposition between 2 letters.

If a same juxtaposition is present several times, then the corresponding nodes are linked several times. For example, the juxtaposition of the letters "b" and "e" appears twice (in the word "be") and two edges, on FIG. 1, link the node "b" to the node "e". In particular, we define as an outgoing edge, an edge leaving a node to connect to another; further, we define as an incoming edge, an edge coming towards a node. For example, on FIG.1, the node "b" has two outgoing edges linking it to the node "c". Similarly, the node "b" has two incoming edges linking it to the node " "" " corresponding to the space symbol.

The original text carrying sensitive data or support text T is one of the Eulerian paths of this syntax graph G. A Eulerian path (or trail) is a path within the graph which visits every edge exactly once. Such paths were introduced when the mathematician Euler addressed the famous seven bridges of Königsberg problem.
There exist E(G) Eulerian paths, that we can here enumerate from 1 to E(G). This number E(G) can be computed in several ways, including by using the BEST theorem.

The text T cannot be retrieved directly from the syntax graph G, as it represents only one Eulerian path among E(G) possible Eulerian paths. This number is huge.

The creation of the fake text T' consists of creating a random Eulerian path from said syntax graph G of said original text T in order to produce, as an end result, the fake information.

Instead of the original text T carrying sensitive data corresponding to the first Eulerian path, the second randomized Eulerian path is used to form the fake information. Such randomized Eulerian path may result to the following character chain T':

T' = "tor o bes the thation que non be ist tot"

Prior to the steps of creating a random Eulerian path from the syntax graph G determined from the original text carrying sensitive data T, it is first necessary to build the syntax graph G. Thus, a step of building text of r consecutive symbols from the original text carrying sensitive data is involved, as is fixing the value of r consecutive symbols. As such, said building text of r consecutive symbols defines a n-gram and said original text carrying sensitive data T comprises a plurality of n-gram which comprises an initial n-gram and a final n-gram. More specifically, this step requires defining the sequence of the edges for each of the n-grams. With the information relative to the definition of the sequence of the edges for each of the n-grams, the information relative to the edges and for example the number of outgoing edges for each of the n-grams, it is thus possible to determine the syntax graph G from all the n-grams and the original text carrying sensitive data T.

According to a preferred embodiment, in the step of creating the random Eulerian path from said syntax graph G of said original text carrying sensitive data T in order to produce said fake information T', it is necessary to start by recovering the initial n-gram of original text T. Then, an outgoing edge connecting said initial n-gram with a first n-gram is chosen randomly, recovering said first n-gram. It is understood by the expression "recovering a n-gram" that the character of the said n-gram is picked up in order to link it to the current chain of characters, for instance the original n-gram for this initial step. We call the first n-gram the current n-gram. The previous step is repeated with an outgoing edge of the current n-gram going to another n-gram that will be the new current n-gram that will be recovered, given that this outgoing edge has not been used before; in other words, there is then a step of choosing randomly a not already used outgoing edge connecting the current n-gram that has been already recovered with another n-gram to be recovered, and recovering said n-gram to be recovered.

This step is repeated until the current n-gram has no more outgoing edges. In other words, the previous step of repetition is stopped when there is no n-gram to be recovered having at least one outgoing edge not used previously, each of these outgoing edges being used only once. Indeed, as explained above, each time that a n-gram is recovered, the last character of the n-gram is picked in order to form a chain of characters and the incoming edge of this n-gram which is picked up is deleted.

Thus, the method collects sequentially each of the n-grams recovered and build a first intermediary fake information $T_i'$ or said fake information T'.

According to a preferred embodiment, the first intermediary fake information $T_i'$ is issued from a first phase of the invention. Indeed, the first intermediary fake information $T_i'$ requires a supplementary step to be implemented in order to get the fake information T'.

First, it is necessary to scan said first intermediary fake information $T_i'$ from the initial n-gram and detect an intermediate n-gram which has not exhausted its outgoing edge. It is then necessary to split said first intermediary fake information $T_i'$ into a first part $T_{i1}'$ and a second part $T_{i2}'$. The first part $T_{i1}'$ comprises n-grams sequentially collected (during the first phase) between the initial n-gram and said intermediate n-gram. The second part $T_{i2}'$ comprises the n-gram sequentially collected (during the first phase) between said intermediate n-gram (excluded) and the last n-gram collected.

Then, a remaining outgoing edge connecting said intermediate n-gram with a second n-gram is chosen randomly, and the second n-gram is recovered on $T_{i1}'$. We define a remaining outgoing edge as an outgoing edge that has not been used between two n-grams yet.

Then, the step may be repeated in order to choose randomly a remaining outgoing edge connecting the last n-gram that has been already recovered with another n-gram to be recovered. The n-gram to be recovered is then recovered. In other words and according to an example, there is a step of choosing, then randomly, a remaining outgoing edge connecting the second n-gram with another n-gram to be recovered, and recovering said n-gram to be recovered. The previous step is repeated on the remaining n-grams to be recovered. The remaining n-grams are considered as being the n-gram having at least one remaining outgoing edge. The remaining ones will be used once in order to be exhausted.

The previous step of repetition is stopped when there is no n-gram to be recovered having at least one remaining outgoing edge, each of these remaining outgoing edges being used once. At this time the two parts $T_{i1}'$ and $T_{i2}'$ can be concatenated to form the current intermediate $T_i'$ fake text.

$$T_i' = T_{i1}' + T_{i2}'$$

If there is still an n-gram with a remaining outgoing edge, the fake text is splitted on the said n-gram and the previous step is repeated.

The previous steps, from the scanning of the first intermediary fake information $T_i'$ to the stopping of the process, are repeated and stopped until the exhaustion of the use of all the outgoing edges of each of the n-grams. The final intermediate fake information $T_i'$ is the fake information T'.

**Claims**

1. Method for producing fake information T' particularly in the form of documents from original text carrying sensitive data to attract the attention of, track and eventually trap ill-intentioned users comprising :

   - providing an original text carrying sensitive data T,
   - creating a syntax graph G for said original text T for a given n-gram size r, said creating of a syntax graph G comprising:

     ∘ fixing the value r for n-grams, building texts of r consecutive symbols defining a n-gram and said original text T comprising a plurality of n-grams which comprises an initial n-gram and a final n-gram,
     ∘ determining said syntax graph G from all the n-grams in the original text,

   - creating a random Eulerian path from said syntax graph G of said original text in order to produce fake information T'.

2. Method according to claim 1, wherein said original text carrying sensitive data T and said fake information T' are both a text written in natural language.

3. Method according to claim 1, wherein, the step of creating the random Eulerian path from said syntax graph G of said original text in order to produce said fake information consist in:

   - recovering the initial n-gram of original text T,
   - choosing, then randomly, an outgoing edge connecting said initial n-gram with a first n-gram, and recovering said first n-gram,
   - choosing, then randomly, an outgoing edge connecting the n-gram that has been already recovered with another n-gram to be recovered, and recovering said n-gram to be recovered,
   - repeating the previous step on the remaining n-gram to be recovered,
   - stopping the previous step when there is no n-gram to be recovered having previously used all the outgoing edges of the current n-gram,
   - sequentially collecting each of the n-grams recovered and building a first intermediary fake information $T_i'$ or said fake information T'.

4. Method according to claim 3, further comprising the following steps :

   - scanning said first intermediary fake information $T_i'$ from the initial N-gram and detecting an intermediate n-gram which has not exhausted its outgoing edge,
   - splitting said first intermediary fake information $T_i'$ into a first part $T_{i1}'$ comprising the n-grams sequentially collected between the initial n-gram and said intermediate n-gram and a second part $T_{i2}'$ comprising the n-grams sequentially collected between said intermediate n-gram and the last n-gram collected,
   - choosing randomly a remaining outgoing edge connecting said intermediate n-gram with a second n-gram, and recovering said second n-gram,
   - choosing, then randomly, a remaining outgoing edge connecting the n-gram that has been already recovered with another n-gram to be recovered, and recovering said n-gram to be recovered,
   - repeating the previous step on the remaining n-gram to be recovered, the remaining n-gram having at least one remaining outgoing edge,
   - stopping the previous step when there is no n-gram to be recovered having used all the outgoing edges of the current n-gram,
   - sequentially collecting each of the n-grams recovered and complementing with them the first part of the intermediary fake document and concatenating to the second part of the intermediary fake document,
   - repeating and stopping the previous steps up until exhaustion of the use of all the outgoing edges of each of the n-grams.

5. Transmitter for transmitting a fake information to a receiver over a communication channel, said transmitter being adapted for :

   - determining a syntax graph G from an original text T for a given n-gram size r, said determining of a syntax graph G comprising:

◦ fixing the value r for n-grams, building text of r consecutive symbols defining a n-gram and said original text T comprising a plurality of n-gram which comprises an initial n-gram and a final n-gram,
◦ determining said syntax graph G from all the n-grams of size r in the original text T,

- creating a random Eulerian path from said syntax graph G of said original text T in order to produce said fake information T',
- transmitting said fake information T' to a receiver.

6. Transmitter according to claim 5, wherein said original text T and said fake information T' are both a text written in a natural language.

7. Transmitter according to claim 5, said transmitter being adapted for:

- recovering the initial n-gram of original text T,
- choosing then randomly an outgoing edge connecting said initial n-gram with a first n-gram, and recovering said first n-gram,
- choosing then randomly an outgoing edge connecting the n-gram that has been already recovered with another n-gram to be recovered, and recovering said n-gram to be recovered,
- repeating the previous step on the remaining n-gram to be recovered,
- stopping the previous step when there is no n-gram to be recovered having previously used all the outgoing edges of the current n-gram,
- sequentially collecting each of the n-grams recovered and build a first intermediary fake information $T_i'$ or said fake information T'.

8. Transmitter according to claim 7, said transmitter being adapted for:

- scanning said first intermediary fake information $T_i'$ from the initial N-gram and detecting an intermediate n-gram which has not exhausted its outgoing edge,
- splitting said first intermediary fake information $T_i'$ into a first part $T_{i1}'$ comprising the n-gram sequentially collected between the initial n-gram and said intermediate n-gram and a second part $T_{i2}'$ comprising the n-gram sequentially collected between said intermediate n-gram and the last n-gram collected,
- choosing randomly a remaining outgoing edge connecting said intermediate n-gram with a second n-gram, and recovering said second n-gram,
- choosing then randomly a remaining outgoing edge connecting the n-gram that has been already recovered with another n-gram to be recovered, and recovering said n-gram to be recovered,
- repeating the previous step on the remaining n-gram to be recovered, the remaining n-gram having at least one remaining outgoing edge,
- stopping the previous step when there is no n-gram to be recovered having used all the outgoing edges of the current n-gram,
- sequentially collecting each of the n-grams recovered and complementing with them the first part of the intermediary fake document and concatenating to the second part of the intermediary fake document,
- repeating and stopping the previous steps until the exhaustion of the use of all the outgoing edges of each of the n-grams.

9. Communication network comprising at least a transmitter according to any of claims 5 to 8 and at least a receiver for receiving said fake information T'.

10. Computer program product comprising computer-executable instructions for performing a method according to any of claims 1 to 4.

11. Digital storage medium encoding a machine-executable program of instructions to perform a method according to any of the claims 1 to 4.

**Patentansprüche**

1. Verfahren zum Erzeugen von Falschinformation T', insbesondere in der Form von Dokumenten von einem Originaltext, der sensitive Daten enthält, um die Aufmerksamkeit von böswilligen Nutzern auf sich zu ziehen und diese zu verfolgen und, eventuell, zu fassen, umfassend:

- Bereitstellen eines Originaltextes, der sensitive Daten T enthält,
- Erzeugen eines Syntaxgraphen G für besagten Originaltext T für ein gegebenes N-Gram der Größe r, wobei das Erzeugen eines Syntaxgraphen G umfasst:

◦ Fixieren des Wertes r für N-Grams, Erstellung von Texten mit r konsekutiven Symbolen, die ein N-Gram definieren und wobei besagter Originaltext T umfasst eine Vielzahl von N-Grams, welche ein Anfangs-N-Gram und ein End-N-Gram enthalten,
◦ Bestimmen besagten Syntaxgraphen G aus allen N-Grams in dem Originaltext,

- Erzeugen eines randomisierten Eulerkreises von besagtem Syntaxgraphen G von besagtem Originaltext, um Falschinformation T' zu erzeugen.

2. Verfahren nach Anspruch 1, wobei besagter Originaltext sensitive Information T enthält und besagte Falschinformation T' beide in natürlicher Sprache geschriebene Texte sind.

3. Verfahren nach Anspruch 1, wobei der Schritt des Erzeugens des randomisierten Eulerkreises von besagtem Syntaxgraphen G von besagtem Originaltext, um Falschinformation zu erzeugen, besteht in:

   - Wiederherstellung des ursprünglichen N-Grams des Originaltextes T,
   - danach, randomisiertes Auswählen einer ausgehenden Kante, die besagtes ursprüngliches N-Gram mit einem ersten N-Gram verbindet, und Wiederherstellen besagten ersten N-Grams,
   - dann, randomisiertes Auswählen einer ausgehenden Kante, welche das N-Gram, das schon wiederhergestellt worden ist, mit einem anderen N-Gram verbindet, das wiederhergestellt werden muss, und Wiederherstellen besagten wiederherzustellenden N-Grams.
   - Wiederholen des vorhergehenden Schrittes mit dem verbleibenden wiederherzustellenden N-Gram,
   - Stoppen des vorhergehenden Schrittes, wenn es kein N-Gram mehr gibt, das wiederherzustellen ist, und vorher alle ausgehenden Kanten des aktuellen N-Grams verwendet worden sind,
   - sequentielle Sammlung eines jeden wiederhergestellten N-Grams und Erstellen einer ersten Zwischenfalschinformation $T_i'$ oder besagter Falschinformation T'.

4. Verfahren nach Anspruch 3, weiterhin umfassend die folgenden Schritte:

   - Scannen besagter erster Zwischenfalschinformation $T_i'$ von dem ursprünglichen N-gram und Erkennen eines Zwischen-N-Grams, welches noch nicht seine ausgehende Kante verbraucht hat,
   - Teilen besagter erster Zwischenfalschinformation $T_i'$ in einen ersten Teil $T_i 1$, der N-Grams umfasst, die sequentiell gesammelt worden sind zwischen dem ursprünglichen N-Gram und besagtem Zwischen-N-Gram, und wobei ein zweiter Teil Ti2' die N-Grams umfasst, die sequentiell gesammelt worden sind zwischen besagtem N-Gram und dem letzten gesammelten N-Gram,
   - randomisiertes Auswählen einer verbleibenden ausgehenden Kante, die besagtes Zwischen-N-Gram mit einem zweiten N-Gram verbindet, und Wiederherstellen besagten zweiten N-Grams,
   - dann randomisiertes Auswählen einer verbleibenden ausgehenden Kante, welche das N-Gram, das schon wiederhergestellt worden ist, mit einem anderen N-Gram verbindet, das wiederhergestellt werden muss, und
   - Wiederherstellen besagten wiederherzustellenden N-Grams, wobei das verbleibende N-Gram mindesten eine verbleibende ausgehende Kante aufweist,
   - Stoppen des vorhergehenden Schrittes, wenn es kein N-Gram mehr gibt, das wiederherzustellen ist, und vorher alle ausgehenden Kanten des aktuellen N-Grams verwendet worden sind,
   - sequentielles Sammeln eines jeden der wiederhergestellten N-Grams und Ergänzen mit ihnen des ersten Teils des Zwischenfakedokuments und Konzentrieren auf den zweiten Teil des Zwischenfakedokuments,
   - Wiederholen und Stoppen der vorhergehenden Schritte, bis die Verwendung aller ausgehenden Kanten eines jeden N-Grams abgeschlossen ist.

5. Sender zum Senden einer Falschinformation an einen Empfänger über einen Kommunikationskanal, wobei besagter Sender ausgelegt ist für:

   - das Bestimmen eines Syntaxgraphen G von einem Originaltext T für ein gegebenes N-Gram der Größe r, wobei das besagte Bestimmen eines Syntaxgraphen G umfasst:

     ∘ Fixieren des Wertes r für N-Grams, Erstellung von Texten mit r konsekutiven Symbolen, die ein N-Gram definieren und wobei besagter Originaltext T umfasst eine Vielzahl von N-Grams, welche ein Anfangs-N-Gram und eine End-N-Gram enthalten,
     ∘ Bestimmen besagten Syntaxgraphen G aus allen N-Grams der Größe r in dem Originaltext T,

   - Erzeugen eines randomisierten Eulerkreises von besagtem Syntaxgraphen G von besagtem Originaltext T, um Falschinformation T' zu erzeugen,
   - Übertragen besagter Falschinformation T' auf einen Empfänger.

6. Sender nach Anspruch 5, wobei besagter Originaltext T und besagte Falschinformation T' beide in einer natürlichen Sprache geschriebene Texte sind.

7. Sender nach Anspruch 5, wobei besagter Sender ausgelegt ist für:

- Wiederherstellung des ursprünglichen N-Grams des Originaltextes T,
- danach, randomisiertes Auswählen einer ausgehenden Kante, die besagtes ursprüngliches N-Gram mit einem ersten N-Gram verbindet, und Wiederherstellen besagten ersten N-Grams,
- dann, randomisiertes Auswählen einer ausgehenden Kante, welche das N-Gram, das schon wiederhergestellt worden ist, mit einem anderen N-Gram verbindet, das wiederhergestellt werden muss, und Wiederherstellen besagten wiederherzustellenden N-Grams.
- Wiederholen des vorhergehenden Schrittes mit dem verbleibenden wiederherzustellenden N-Gram,
- Stoppen des vorhergehenden Schrittes, wenn es kein N-Gram mehr gibt, das wiederherzustellen ist, und vorher alle ausgehenden Kanten des aktuellen N-Grams verwendet worden sind,
- sequentielle Sammlung eines jeden wiederhergestellten N-Grams und Erstellen einer ersten Zwischenfalschinformation $T_i'$ oder besagter Falschinformation T'.

8. Sender nach Anspruch 7, wobei besagter Sender ausgelegt ist für:

   - Scannen besagter erster Zwischenfalschinformation $T_i'$ von dem ursprünglichen N-gram und Erkennen eines Zwischen-N-Grams, welches noch nicht seine ausgehende Kante verbraucht hat,
   - Teilen besagter erster Zwischenfalschinformation $T_i'$ in einen ersten Teil $T_i1$, der N-Grams umfasst, die sequentiell gesammelt worden sind zwischen dem ursprünglichen N-Gram und besagtem Zwischen-N-Gram und wobei ein zweiter Teil $T_i2'$ die N-Grams umfasst, die sequentiell gesammelt worden sind zwischen besagtem N-Gram und dem letzten gesammelten N-Gram,
   - randomisiertes Auswählen einer verbleibenden ausgehenden Kante, die besagtes Zwischen-N-Gram mit einem zweiten N-Gram verbindet, und Wiederherstellen besagten zweiten N-Grams,
   - dann, randomisiertes Auswählen einer verbleibenden ausgehenden Kante, welche das N-Gram, das schon wiederhergestellt worden ist, mit einem anderen N-Gram verbindet, das wiederhergestellt werden muss, und Wiederherstellen besagten wiederherzustellenden N-Grams.
   - Wiederholen des vorhergehenden Schrittes am verbleibenden wiederherzustellenden N-Gram, wobei das verbleibende N-Gram mindestens eine verbleibende ausgehende Kante aufweist,

- Stoppen des vorhergehenden Schrittes, wenn es kein N-Gram mehr gibt, das wiederherzustellen ist, und vorher alle ausgehenden Kanten des aktuellen N-Grams verwendet worden sind,
- sequentielles Sammeln eines jeden der wiederhergestellten N-Grams und Ergänzen mit ihnen des ersten Teils des Zwischenfakedokuments und Konzentrieren auf den zweiten Teil des Zwischenfakedokuments,
- Wiederholen und Stoppen der vorhergehenden Schritte, bis die Verwendung aller ausgehenden Kanten eines jeden N-Grams abgeschlossen ist.

9. Kommunikationsnetzwerk, umfassend mindestens einen Sender nach einem beliebigen der Ansprüche 5 bis 8 und mindestens einen Empfänger zum Empfangen besagter Falschinformation T'.

10. Computerprogramm-Produkt, umfassend computerausführbare Befehle zum Durchführen eines Verfahrens nach einem beliebigen der Ansprüche 1 bis 4.

11. Digitales Speichermedium zum Codieren eines maschinenausführbaren Programms von Befehlen zum Durchführen eines Verfahrens nach einem beliebigen der Ansprüche 1 bis 4.

## Revendications

1. Procédé pour produire de fausses informations T' notamment sous la forme de documents à partir d'un texte original portant des données sensibles pour attirer l'attention de, suivre et finalement piéger des utilisateurs malintentionnés comprenant les étapes suivantes :

   - fournir un texte original portant des données sensibles T,
   - créer un graphe syntaxique G pour ledit texte original T pour une taille de n-gramme r donnée, ladite création d'un graphe syntaxique G comprenant les étapes suivantes :

     ∘ fixer la valeur r pour des n-grammes, construire des textes de r symboles consécutifs définissant un n-gramme et ledit texte original T comprenant une pluralité de n-grammes qui comprend un n-gramme initial et un n-gramme final,
     ∘ déterminer ledit graphe syntaxique G à partir de tous les n-grammes dans le texte original,

   - créer un chemin eulérien aléatoire à partir dudit graphe syntaxique G dudit texte original afin de produire de fausses informations T'.

2. Procédé selon la revendication 1, dans lequel ledit texte original portant des données sensibles T et lesdites fausses informations T' sont tous deux un texte écrit en langage naturel.

3. Procédé selon la revendication 1, dans lequel l'étape de création du chemin eulérien aléatoire à partir dudit graphe syntaxique G dudit texte original afin de produire lesdites fausses informations consiste à :

   - récupérer le n-gramme initial du texte original T,
   - choisir, ensuite aléatoirement, une arête sortante reliant ledit n-gramme initial à un premier n-gramme, et récupérer ledit premier n-gramme,
   - choisir, ensuite aléatoirement, une arête sortante reliant le n-gramme qui a déjà été récupéré à un autre n-gramme à récupérer, et récupérer ledit n-gramme à récupérer,
   - répéter l'étape précédente sur le n-gramme restant à récupérer,
   - arrêter l'étape précédente lorsqu'il n'y a pas de n-gramme à récupérer ayant utilisé précédemment toutes les arêtes sortantes du n-gramme actuel,
   - collecter séquentiellement chacun des n-grammes récupérés et construire une première fausse information intermédiaire $T_i'$ ou lesdites fausses informations T'.

4. Procédé selon la revendication 3, comprenant en outre les étapes suivantes :

   - balayer ladite première fausse information intermédiaire $T_i'$ à partir du N-gramme initial et détecter un n-gramme intermédiaire qui n'a pas épuisé son arête sortante,
   - séparer ladite première fausse information intermédiaire $T_i'$ en une première partie $T_{i1}'$ comprenant les n-grammes collectés séquentiellement entre le n-gramme initial et ledit n-gramme intermédiaire et une seconde partie $T_{i2}'$ comprenant les n-grammes collectés séquentiellement entre ledit n-gramme intermédiaire et le dernier n-gramme collecté,
   - choisir aléatoirement une arête sortante restante reliant ledit n-gramme intermédiaire à un second n-gramme, et récupérer ledit second n-gramme,
   - choisir, ensuite aléatoirement, une arête sortante restante reliant le n-gramme qui a déjà été récupéré à un autre n-gramme à récupérer, et récupérer ledit n-gramme à récupérer,
   - répéter l'étape précédente sur le n-gramme restant à récupérer, le n-gramme restant ayant au moins une arête sortante restante,
   - arrêter l'étape précédente lorsqu'il n'y a pas de n-gramme à récupérer ayant utilisé toutes les arêtes sortantes du n-gramme actuel,
   - collecter séquentiellement chacun des n-grammes récupérés et compléter avec eux la première partie du faux document intermédiaire et concaténer à la seconde partie du faux document intermédiaire,
   - répéter et arrêter les étapes précédentes jusqu'à épuisement de l'utilisation de toutes les arêtes sortantes de chacun des n-grammes.

5. Transmetteur pour transmettre de fausses informations à un récepteur sur un canal de communication, ledit transmetteur étant adapté pour :

   - déterminer un graphe syntaxique G à partir d'un texte original T pour une taille de n-gramme r donnée, ladite détermination d'un graphe syntaxique G comprenant les étapes suivantes :

      ◦ fixer la valeur r pour des n-grammes, construire un texte de r symboles consécutifs définissant un n-gramme et ledit texte original T comprenant une pluralité de n-grammes qui comprend un n-gramme initial et un n-gramme final,
      ◦ déterminer ledit graphe syntaxique G à partir de tous les n-grammes de taille r dans le texte original T,

   - créer un chemin eulérien aléatoire à partir dudit graphe syntaxique G dudit texte original T afin de produire lesdites fausses informations T',
   - transmettre lesdites fausses informations T' à un récepteur.

6. Transmetteur selon la revendication 5, dans lequel ledit texte original T et lesdites fausses informations T' sont tous deux un texte écrit dans un langage naturel.

7. Transmetteur selon la revendication 5, ledit transmetteur étant adapté pour :

   - récupérer le n-gramme initial du texte original T,
   - choisir ensuite aléatoirement une arête sortante reliant ledit n-gramme initial à un premier n-gramme, et récupérer ledit premier n-gramme,
   - choisir ensuite aléatoirement une arête sortante reliant le n-gramme qui a déjà été récupéré à un autre n-gramme à récupérer, et récupérer ledit n-gramme à récupérer,
   - répéter l'étape précédente sur le n-gramme restant à récupérer,
   - arrêter l'étape précédente lorsqu'il n'y a pas de n-gramme à récupérer ayant utilisé précédemment toutes les arêtes sortantes du n-gramme actuel,

- collecter séquentiellement chacun des n-grammes récupérés et construire une première fausse information intermédiaire $T_i'$ ou lesdites fausses informations $T'$.

8. Transmetteur selon la revendication 7, ledit transmetteur étant adapté pour :

- balayer ladite première fausse information intermédiaire $T_i'$ à partir du N-gramme initial et détecter un n-gramme intermédiaire qui n'a pas épuisé son arête sortante,
- séparer ladite première fausse information intermédiaire $T_i'$ en une première partie $T_{i1}'$ comprenant le n-gramme collecté séquentiellement entre le n-gramme initial et ledit n-gramme intermédiaire et une seconde partie $T_{i2}'$ comprenant le n-gramme collecté séquentiellement entre ledit n-gramme intermédiaire et le dernier n-gramme collecté,
- choisir aléatoirement une arête sortante restante reliant ledit n-gramme intermédiaire à un second n-gramme, et récupérer ledit second n-gramme,
- choisir ensuite aléatoirement une arête sortante restante reliant le n-gramme qui a déjà été récupéré à un autre n-gramme à récupérer, et récupérer ledit n-gramme à récupérer,
- répéter l'étape précédente sur le n-gramme restant à récupérer, le n-gramme restant ayant au moins une arête sortante restante,
- arrêter l'étape précédente lorsqu'il n'y a pas de n-gramme à récupérer ayant utilisé toutes les arêtes sortantes du n-gramme actuel,
- collecter séquentiellement chacun des n-grammes récupérés et compléter avec eux la première partie du faux document intermédiaire et concaténer à la seconde partie du faux document intermédiaire,
- répéter et arrêter les étapes précédentes jusqu'à l'épuisement de l'utilisation de toutes les arêtes sortantes de chacun des n-grammes.

9. Réseau de communication comprenant au moins un transmetteur selon l'une quelconque des revendications 5 à 8 et au moins un récepteur pour recevoir lesdites fausses informations $T'$.

10. Produit de programme informatique comprenant des instructions exécutables par ordinateur pour effectuer un procédé selon l'une quelconque des revendications 1 à 4.

11. Support de stockage numérique encodant un programme d'instructions exécutable par machine pour effectuer un procédé selon l'une quelconque des revendications 1 à 4.

Fig.1

**EP 3 018 647 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6823068 B

### Non-patent literature cited in the description

- Combined Methodology Based on Kernel Regression and Kernel Density Estimation for Sign Language Machine Translation. **MEHREZ BOULARES ; MOHAMED JEMN.** ADVANCES IN COMMUNICATION NETWORKING: 20TH EUNICE/IFIP EG 6.2, 6.6 INTERNATIONAL WORKSHOP, REVISED SELECTED PAPERS. SPRINGER VERLAG, 01 September 2014

- **NICOLAS SERRANO et al.** On a Kernel Regression Approach to Machine Translation. *PATTERN RECOGNITION AND IMAGE ANALYSIS,* 10 June 2009, ISBN 978-3-642-02171-8